# EUROPÄISCHE PATENTSCHRIFT

(11) **EP 3 332 280 B1**
(45) Veröffentlichungstag und Bekanntmachung des Hinweises auf die Patenterteilung: **03.06.2020**
(21) Anmeldenummer: 16753287.8
(22) Anmeldetag: 29.07.2016
(51) Int. Cl.: G02B 6/44

(54) **KABEL SOWIE VERFAHREN ZU DESSEN HERSTELLUNG**
CABLE AND METHOD FOR PRODUCING SAME
CÂBLE ET PROCÉDÉ POUR LE RÉALISER

(30) Priorität: 05.08.2015 DE 102015214889
(43) Veröffentlichungstag der Anmeldung: 13.06.2018
(73) Patentinhaber: LEONI Kabel GmbH, 91154 Roth (DE)
(72) Erfinder: BREDL, Johannes, 91183 Abenberg (DE); SCHRAMM, Volker, 91154 Roth (DE)
(74) Vertreter: FDST Patentanwälte
(86) Internationale Anmeldenummer: PCT/EP2016/068234
(87) Internationale Veröffentlichungsnummer: WO 2017/021336

(56) Entgegenhaltungen:
- WO-A1-2010/109339
- DE-A1- 19 713 063
- JP-A- H08 262 288
- JP-A- S57 124 314
- US-A- 6 052 502
- US-A1- 2010 158 455

## Beschreibung

Die Erfindung betrifft ein Kabel mit einem Führungselement und mit einer Signalleitung. Weiterhin betrifft die Erfindung ein Verfahren zur Herstellung eines solchen Kabels.

Ein Kabel mit einer Signalleitung dient üblicherweise der Signalübertragung, wobei die Signalleitung hierzu eine Anzahl von Signaladern aufweist. Speziell bei der Verwendung von Lichtwellenleitern für die Signalübertragung besteht bei einer mechanischen Beanspruchung, beispielsweise einer Dehnung oder Biegung des Kabels regelmäßig die Gefahr einer Zerstörung oder zumindest einer Beschädigung der Signalleitung, wodurch die Qualität und Sicherheit der Signalübertragung insgesamt gefährdet ist. Um dies zu vermeiden kann die Signalleitung als Bündelader ausgebildet werden, innerhalb welcher die Signaladern lose und mit einer Überlänge angeordnet sind. Dadurch steht für die Signaladern dann ein gewisser Bewegungsspielraum zur Verfügung.

Alternativ besteht die Möglichkeit, eine oder mehrere Bündeladern in mehreren Windungen helixförmig um ein zentrales Kern- oder Führungselement herumzuführen. Bei einer Zugbelastung werden dann die Windungen der Bündelader auseinandergezogen, sodass sich deren Abstand zueinander vergrößert, wobei sich der Radius der Windungen verringert. Entsprechendes gilt auch für die in der Bündelader geführten Signaladern, welche aufgrund der losen Anordnung ihre Lage verändern können ohne selbst zu stark mechanisch belastet zu werden. Aufgrund der prinzipbedingten Längenzugabe bei der Signalleitung weisen solche Kabel entsprechend große Durchmesser auf.

In der JP S57 124 314 A wird eine Oberleitung beschrieben, in deren Innerem eine optische Faser geführt ist, welche wiederum von zwei Folien eingefasst ist.

Die US 2010/0158455 A1 beschreibt ein Kabel mit einem Signalleiter, welcher derart in einen Innenraum aufgenommen ist, dass ein herausnehmbarer Signalleiter-Teil aus dem Innenraum herausgenommen werden kann.

Die WO 2010/109339 A1 beschreibt einen Kabelkanal, in welchem eine oder mehrere optische Fasern mit Überlänge aufbewahrt sind.

Die JP H08 262 288 A beschreibt ein Kernelement mit mehreren äußeren Schlitzen, in welchen optische Fasern angeordnet sind.

Vor diesem Hintergrund ist es eine Aufgabe der Erfindung, ein Kabel mit reduziertem Raumbedarf anzugeben. Dabei soll eine Signalleitung des Kabels weiterhin möglichst wirksam vor einer zu starken mechanischen Beanspruchung, insbesondere Dehnung geschützt sein.

Die Aufgabe wird erfindungsgemäß gelöst durch ein Kabel mit den Merkmalen gemäß Anspruch 1 sowie durch ein Verfahren mit den Merkmalen gemäß Anspruch 14. Vorteilhafte Ausgestaltungen, Weiterbildungen und Varianten sind Gegenstand der Unteransprüche. Dabei gelten die Ausführungen im Zusammenhang mit dem Kabel sinngemäß auch für das Verfahren und umgekehrt.

Das Kabel weist ein Führungselement sowie eine Signalleitung zur Signalübertragung auf. Das Führungselement erstreckt sich flach in einer Führungsebene. Die Signalleitung ist mittels des Führungselements in der Führungsebene geführt, und zwar entlang eines gewundenen Pfads. Dabei weist die Signalleitung in der Führungsebene mehrere Biegungen auf. Das Führungselement definiert dabei eine Führung für die Signalleitung. Im einfachsten Fall wird durch das Führungselement ein begrenzter Innenraum ausgebildet, innerhalb dessen die Signalleitung lose und damit frei beweglich geführt ist. Die Signalleitung ist gegenüber dem Kabel insgesamt mit einer Überlänge ausgeführt, um bei einer Dehnung des Kabels eine Dehnung der Signalader, d.h. insbesondere einer Signalader innerhalb der Signalleitung dadurch zu vermeiden, dass die Signalleitung und insbesondere die Signalader zunächst geradegezogen wird, anstatt direkt eine Zugbelastung zu erfahren. Die Überlänge muss jedoch entsprechend im Kabel untergebracht werden und führt dann zu einem generell gewundenen, nicht-geraden Verlauf der Signalleitung relativ zum Kabel; die Signalleitung weicht also quasi quer zu einer Längsrichtung des Kabels aus. Der Erfindung liegt nun der Gedanke zugrunde, die Signalleitung auf kontrollierte Weise lediglich in einer Dimension, d.h. Querrichtung ausweichen zu lassen. Dadurch ergibt sich der Vorteil eines geringen Raumbedarfs, so dass das Kabel insgesamt kompakt und beispielsweise mit flachem Querschnitt ausgebildet werden kann. Während bei einer herkömmlichen räumlichen Windung der Signalleitung üblicherweise ein Totraum entsteht, beispielsweise bei einem helixförmigen Pfad im Zentrum, erfolgt in der flächigen Ausführung eine effizientere Platzausnutzung. Das erfindungsgemäße Kabel ist somit platzsparend, stellt jedoch weiterhin eine ausreichende Überlänge für die Signalleitung zur Verfügung, um eine hohe Dehnbelastung schadfrei zu überstehen.

Der Pfad ist generell gewunden, sodass die Signalleitung entlang des Pfads mehrere Biegungen ausbildet. Aufgrund der flachen Ausführung des Führungselements liegen sämtliche Biegungen innerhalb der Führungsebene. Die Führungsebene ist parallel zur Längsrichtung. Die Biegungen weisen jeweils einen Biegeradius auf, der zweckmäßigerweise hinsichtlich eines minimalen Biegeradius der Signalleitung ausgewählt ist, beispielsweise etwa doppelt so groß, um noch ein hinreichendes Maß an Biegung zu ermöglichen. Um die mechanischen Eigenschaften des Kabels entlang der Längsrichtung möglichst homogen zu gestalten, sind sämtliche Biegungen vorzugsweise mit dem gleichen Biegeradius ausgebildet.

Zur Führung der Signalleitung weist das Führungselement eine Führungskontur auf, welche den Verlauf des Pfads und damit den Verlauf der Signalleitung vorgibt. Diese liegt also an der Führungskontur an, die daher auch als Anlagekontur bezeichnet werden kann. In einer Ausführungsvariante ist die Signalleitung an der Führungskontur befestigt. Durch die Führungskontur ist eine Zwangsführung für die Signalleitung und damit eine definierte Geometrie für den Pfad vorgegeben. Insbesondere wird dadurch beispielsweise sichergestellt, dass ein minimaler Biegeradius der Signalleitung nicht unterschritten wird. Die Führungskontur definiert einen begrenzten Führungsraum. Die Führungskontur weist hierzu insbesondere zwei gegenüberliegende Wandungsbereiche auf, die den Führungsraum begrenzen und zwischen denen die Signalleitung einliegt. Zweckmäßigerweise folgt die Führungskontur im Querschnitt einer Au-ßenkontur der Signalleitung. Vorzugsweise entspricht der Querschnitt - bis auf ein notwendiges Toleranzmaß - dem Querschnitt der Signalleitung, um einen optimalen Halt zu gewährleisten. Zumindest weist der Führungsraum eine Breite auf, die der Breite (Durchmesser) der Signalleitung entspricht.

Bevorzugterweise ist der Pfad mäanderförmig, wodurch sich eine besonders effiziente Platzausnutzung ergibt. Die Biegungen sind dann abwechselnd links- und rechtsgekrümmt, sodass sich entlang des Pfads insbesondere eine Wellenform ergibt.

Das Kabel sowie das Führungselement erstrecken sich allgemein in einer Längsrichtung und weisen quer zu dieser einen Querschnitt auf. Im Querschnitt weist das Führungselement eine Höhe sowie senkrecht dazu eine Breite auf. Ohne Beschränkung der Allgemeinheit ist die Höhe entlang einer kurzen Achse des Führungselements gemessen und die Breite entlang einer langen Achse. Aufgrund der flachen Ausführung des Führungselements ist die Breite dann größer als die Höhe. Beispielsweise entspricht der Querschnitt des Führungselements einer Ellipse oder einem Rechteck und die Breite und die Höhe entsprechen dann Hauptachsen bzw. Kantenlängen des Querschnitts.

In einer besonders platzsparenden Ausgestaltung entspricht die Höhe des Führungselements in etwa einem Durchmesser der Signalleitung und die Breite des Führungselements ist größer als der Durchmesser. Mit anderen Worten: das Führungselement ist derart flach ausgeführt, dass dessen Abmessung in einer Dimension, nämlich senkrecht zur Führungsebene, an den Durchmesser der Signalleitung angepasst und somit die Höhe minimiert ist. Unter in etwa wird dann insbesondere verstanden, dass die Höhe des Führungselements sich um nicht mehr als 25 % vom Durchmesser der Signalleitung unterscheidet.

Die Breite ist entsprechend größer als die Höhe gewählt, um ausreichend Raum für die Biegungen der Signalleitung bereitzustellen. Bevorzugterweise ist dabei die Breite wenigstens doppelt so groß, vorzugsweise wenigstens fünfmal so groß wie der Durchmesser der Signalleitung und insbesondere höchstens zwanzigmal so groß. Die Untergrenze ist hierbei im Wesentlichen durch die Überlänge der Signalleitung gegeben, welche zur Realisierung einer bestimmten Dehnbarkeit des Kabels benötigt wird. Beispielsweise soll das Kabel bei einem standardisierten Dehnungstest eine Längenänderung von bis zu 2 % tolerieren ohne einen Funktionsverlust zu erleiden. Die Signalleitung wird dann mit einer entsprechenden Überlänge von etwa 2 % oder mehr ausgebildet, sodass eine Dehnung des Kabels um diesen Wert nicht zu einer übermäßigen Zugbelastung der Signalleitung führt. Die Obergrenze ist dagegen im Wesentlichen durch den minimal zulässigen Biegeradius der Signalleitung begrenzt sowie insbesondere durch einen Bewegungsraum der Signalader innerhalb der Signalleitung, d.h. einen freien Innenraum innerhalb der Signalleitung.

Vorzugsweise weist das Führungselement einen Mantel auf, innerhalb dessen die Signalleitung geführt ist. Der Mantel ist rohr- oder schlauchförmig ausgebildet und schließt einen Innenraum ein, in welchem die Signalleitung angeordnet ist. Der Mantel bildet daher eine Umhüllung, innerhalb derer die Signalleitung angeordnet ist. Entsprechend der flachen Ausgestaltung ist der Mantel ebenfalls flach ausgebildet. Der Abstand zwischen einer Oberseite und einer Unterseite des Mantels entspricht dabei vorzugsweise der Höhe der Signalleitung. Der Mantel ist beispielsweise extrudiert oder laminiert. Der Mantel ist insbesondere aus einem Kunststoff gefertigt, beispielsweise PE oder PVC. Der Mantel ist vorzugsweise ein Außenmantel des Kabels.

In einer geeigneten Variante dient der Mantel direkt zur Führung der Signalleitung. Beispielsweise ist es denkbar, den Mantel mit einer geeigneten, gewundenen Innenkontur zu versehen, welche die Führungskontur zur Festlegung des Pfades und damit zur Führung der Signalleitung bildet.

Vorliegend weist das Führungselement zusätzlich oder alternativ zum Mantel eine Anzahl von Formteilen, also ein oder mehrere Formteile auf, die die Kontur ausbilden, welche den Pfad vorgibt. Auf diese Weise ist eine besonders präzise und kontrollierte Führung der Signalleitung gewährleistet. Die Signalleitung liegt dann an den Formteilen an und folgt auf diese Weise besonders exakt dem vorgegebenen Pfad. Im Gegensatz zu einer losen Führung der Signalleitung erfolgt also eine besonders definierte Führung, welche insbesondere auch eine besonders homogene Anordnung der Signalleitung gewährleistet. Ein weiterer Vorteil besteht auch insbesondere darin, dass mittels der Formteile auch das Unterschreiten eines minimalen Biegeradius der Signalleitung vermieden wird.

Bevorzugt sind dabei zumindest zwei gegenüberliegende Formteile als flache Einheiten vorgesehen, Jedes Formteil begrenzt mit einer ersten (inneren) Randseite dabei eine Seite der Führungskontur. Vorzugsweise zeigt die eine zweite (äußere) Randseite, die der ersten Randseite gegenüberliegt, dabei eine andere Kontur als die erste (mäanderförmige oder gebogene) Randseite, insbesondere verläuft die zweite Randseite geradlinig.

Die zumindest zwei gegenüberliegenden Formteile sind allgemein vorzugsweise als vorgefertigte eigene Baueinheiten ausgebildet, die im Zusammenwirken die Führungskontur definieren.

Alternativ ist die Führungskontur als eine beispielsweise nutartige, gewundene Ausnehmung in zumindest einem plattenförmigen Formbauteil ausgebildet. Dessen äußere Randseiten weisen ebenfalls vorzugsweise einen von dem Verlauf der Führungskontur abweichenden Verlauf, insbesondere einen geradlinigen Verlauf auf.

Die Formteile sind zweckmäßigerweise aus einem elastischen Material gefertigt, um bei einer Dehnung des Kabels entsprechend verformbar zu sein und ein gewisses Maß an Längenänderung zu ermöglichen. Insbesondere sind die Formteile um etwa 1 bis 10 % in Längsrichtung dehnbar. Diese Längendehnbarkeit gilt allgemein für die Führungskontur. Geeigneterweise sind die Formteile aus einem Kunststoff gefertigt, insbesondere Polyurethan, Polyethylen oder Polyvinylchlorid. Besonders geeignet ist dabei Polyurethan, da dieses dauerelastisch ist und in einem besonders umfangreichen Elastizitätsbereich verfügbar ist.

Geeigneterweise sind mehrere Formteile in Längsrichtung des Kabels hintereinander angeordnet, sodass sich ein Kabel beliebiger Länge fertigen lässt, indem einfach entsprechend viele Formteile verwendet werden. Die Formteile bilden dabei jeweils sozusagen einzelne Bauelemente, welche zusammengefügt die Führungskontur ausbilden, die den Pfad für die Signalleitung vorgibt. Die Formteile weisen dabei jeweils eine Teilkontur auf, die entsprechend gebogen ausgebildet ist und jeweils einen Teilabschnitt der Führungskontur definiert.

Bei den Formteilen handelt es sich allgemein um plattenförmige und damit flache Einzelelemente. Gemäß einer ersten Variante ist die Teilkontur durch eine Ausnehmung in einem jeweiligen Einzelelement gebildet.

In einer besonders geeigneten Ausgestaltung sind die Formteile nicht ausschließlich hintereinander angeordnet, sondern in mehreren, insbesondere zwei Gruppen organisiert, die sich jeweils in Längsrichtung erstrecken, allerdings auf unterschiedlichen Seiten der Signalleitung angeordnet sind und diese dann sozusagen einfassen. Auf diese Weise ist dann die äußere Anmutung des Kabels nicht durch den gewundenen Pfad charakterisiert, sondern durch die konkrete Ausgestaltung der Formteile.

In dieser bevorzugten Alternative ist ein jeweiliger Abschnitt der Führungskontur durch zwei einander gegenüberliegende Formteile definiert, die zwischen sich die Führungskontur ausbilden. Jedes der gegenüberliegend angeordneten Formteile weist daher einen Wandungsbereich der Führungskontur auf. In einer zweckmäßigen Variante weisen die zwei einander gegenüberliegenden Formteile eine oder jeweils eine Anformung auf. Diese dient insbesondere als Abstandshalter, zum Einstellen eines vorgegebenen Abstands zwischen den beiden Formteilen und Sicherung der Führungskontur und/oder als Arretierung, um eine relative Längsverschiebung der beiden Formteile zu vermeiden.

Die zur Führungskontur orientierte Randseite der Einzelelemente ist gebogen ausgebildet. Die gegenüberliegende Randseite ist vorzugsweise geradlinig ausgebildet. In Summe bilden die einzelnen Formteile ein allgemein ein plattenförmiges, flaches und insbesondere sich geradlinig erstreckendes Gesamtformteil mit der integrierten Führungskontur aus.

Allgemein lässt sich daher mittels der Formteile auch die äußere Form des Kabels, d.h. insbesondere der Querschnitt entlang des Kabels nahezu beliebig und vorteilhaft unabhängig vom Pfad gestalten. In einer bevorzugten Ausgestaltung weist das Kabel eine glatte Außenseite auf, d.h. der Querschnitt weist eine Außenkontur auf, die entlang des Kabels konstant ist. Die Signalleitung ist dann von den Formteilen quasi eingefasst und trägt nicht zur Außenkontur bei.

Um insbesondere die Fertigung des Kabels zu vereinfachen, sind die Formteile zweckmäßigerweise als Gleichteile ausgebildet, d.h. insbesondere identisch zueinander ausgeformt. Die Formteile werden dann vorzugsweise besonders kosteneffizient als Halbzeug insbesondere in großer Stückzahl gefertigt, beispielsweise als Spritzgussteile. Gegenüberliegende Formteile sind dabei vorzugsweise in Längsrichtung zueinander versetzt angeordnet, insbesondere um ihre halbe Länge. Durch das Hintereinandersetzen mehrerer Formteile wird dann eine periodische Struktur beliebiger Länge ausgebildet, an welcher die Signalleitung ausgerichtet und geführt ist. Auf diese Weise ist dann eine vorteilhafte Endlosfertigung des Kabels möglich.

In einer bevorzugten Weiterbildung weist ein jeweiliges Formteil ein Kupplungselement auf, mittels dessen das jeweilige Formteil mit einem nachfolgenden Formteil verbunden ist. Durch dieses Verbinden der Formteile untereinander ist das Führungselement besonders robust und ein versehentliches Verrutschen der Formteile gegeneinander im Kabel und eine Deformation desselben wird verhindert. Das Kupplungselement ist dabei in einer ersten Variante ein separates Verbindungsteil, beispielsweise ein Stift, ein Bolzen oder ein Dübel, welcher in entsprechende Löcher der Formteile insbesondere passgenau eingesetzt wird. In einer zweiten Variante ist das Kupplungselement an einem der Formteile fest angebracht oder einstückig an dieses angeformt, beispielsweise als hervorstehende Kupplungskontur, Lasche, Haken oder Nase, die bzw. der dann in eine geeignete, insbesondere komplementäre Ausnehmung am nachfolgenden Formteil eingreift oder in eine solche eingesetzt wird. Generell kommt eine Vielzahl an reversiblen und irreversiblen Kupplungsmechanismen infrage, beispielsweise Steckverbindungen, Presspassungen, Hintergriffe, Schnappverbindungen oder Einrastverbindungen.

In zweckdienlicher Ausgestaltung ist das zumindest eine Formteile und vorzugsweise sind die mehreren Formteile - ggf. zusammen mit weiteren Elementen - innerhalb eines durch den Mantel definierten Innenraums angeordnet. Bevorzugt füllt das zumindest eine die Formteil evtl. mit den weiteren (Füll-) Elementen den Innenraum bis auf die Führungskontur und bis auf die Signalleitung vollständig aus. Insgesamt ergibt sich dadurch ein mechanisch stabiles Gebilde. Das zumindest eine Formteil liegt bzw. die mehreren Formteile liegen dabei als vorgefertigte Baueinheit(en) innerhalb des durch den Mantel definierten Innenraums beispielsweise lose ein.

Der Mantel bildet daher insbesondere eine oder auch zwei Begrenzungsseiten für die Führungskontur, je nachdem, ob durch das zumindest eine Formteil die Führungskontur nach einer oder nach zwei (gegenüberliegenden) Seiten offen ist.

In einer vorteilhaften Variante weist das Führungselement anstelle mehrerer in Längsrichtung aneinander gereihte Formteile lediglich ein insbesondere langes Formteil auf. Mit anderen Worten: das Führungselement weist ein Formteil auf, mit einer Länge, welche in etwa der Länge des Kabels entspricht. In dieser Ausgestaltung wird dann auf ein Zusammensetzen mehrerer Formteile verzichtet, wodurch insbesondere die Herstellung des Kabels effizienter gestaltet ist. Stattdessen wird das Formteil als Endloselement bereitgestellt oder zumindest mit einer der Länge, welche der Länge des Kabels entspricht. Mit anderen Worten: das Formteil ist entlang des Kabels unterbrechungsfrei.

Denkbar ist hierbei grundsätzlich eine entsprechende Ausbildung mehrerer sich in Längsrichtung und über die gesamte Länge des Kabels erstreckender Formteile, welche dann bei der Herstellung des Kabels insbesondere gleichzeitig und zweckmäßigerweise auch parallel zugeführt werden. Zur Begrenzung des Pfads sind in dieser Ausführungsvariante insbesondere zwei unterbrechungsfreie Formteile unter Freilassung des Pfades nebeneinander angeordnet.

Das lange Formteil wird insbesondere in einer vorgelagerten Fertigung hergestellt und anschließend dem Herstellungsprozess des Kabels zugeführt. Beispielsweise ist das Formteil ein extrudiertes Bauteil. Alternativ ist das Formteil zunächst ein massives Bauteil, an welchem dann vor oder während der Kabelfertigung die Führungskontur je nach Bedarf ausgebildet wird. In einer weiteren Ausgestaltung wird lediglich ein einziges unterbrechungsfreies Formteil verwendet, in dem der Pfad ausgebildet ist. Beispielsweise wird ein z.B. plattenförmiges Formteil einer Fräsmaschine, z.B. einer CNC-Fräse zugeführt und es wird die Führungskontur eingefräst. In einer geeigneten Ausführungsform ist die Führungskontur dann eine eingefräst Nut, in welche die Signalleitung anschließend eingelegt oder eingezogen wird.

Die Signalleitung wird im Herstellungsprozess des Kabels vorzugsweise als Halbzeug bereitgestellt, welches im Folgenden mit dem Führungselement zum Kabel zusammengesetzt wird. Bevorzugterweise ist die Signalleitung rund, sodass insbesondere herkömmliche Signalleitungen auch zur Herstellung des Kabels verwendet werden können. Aufgrund der prinzipbedingten Rotationssymmetrie einer runden, d.h. im Querschnitt kreisförmigen Signalleitung ist es im Gegensatz zu beispielsweise eckigen Querschnitten möglich, bei der Herstellung auf eine Ausrichtung des Querschnitts der Signalleitung relativ zum Kabel zu verzichten, wodurch sich die Herstellung des Kabels entsprechend vereinfacht.

In einer geeigneten Ausgestaltung weist die Signalleitung zumindest einen Lichtwellenleiter auf und ist somit insbesondere als faseroptische Signalleitung ausgebildet. Der Lichtwellenleiter ist beispielsweise eine Glasfaser oder eine polymeroptische Faser, kurz POF. Der Lichtwellenleiter ist insbesondere zur Datenübertragung ausgebildet. In einer Variante weist die Signalleitung mehrere Lichtwellenleiter auf. In einer weiteren Variante weist die Signalleitung als Signaladern ausschließlich Lichtwellenleiter auf.

In einer Variante ist der Lichtwellenleiter als Sensorelement ausgebildet und das Kabel ist dann insbesondere ein Sensorkabel. Das Sensorelement ist dann vorzugsweise zur insbesondere ortsaufgelösten Messung von Umgebungsparametern ausgebildet, beispielsweise zur Messung einer Temperatur oder eines Drucks oder zur Messung von Schallwellen. Der Umgebungsparameter wird dann vorteilhaft über die gesamte Länge des Kabels gemessen.

Vorliegend ist die Signalleitung eine Bündelader, mit einem Außenrohr und Signaladern, die innerhalb des Außenrohrs verlaufen. Die Signaladern sind hierbei beispielsweise als Lichtwellenleiter wie oben beschrieben ausgebildet. Das Außenrohr umschließt die Signaladern und weist einen Innendurchmesser auf, der größer ist, als ein Gesamtdurchmesser der Signaladern, sodass diesen ein gewisses Maß an Bewegungsraum zu Verfügung steht. Bei einer Dehnung oder Biegung des Kabels können die Signaladern im Außenrohr dann ihre Lage ändern und einer möglichen mechanischen Belastung entsprechend ausweichen. Eine geeignete Lagerung der Signaladern im Außenrohr erfolgt in einer bevorzugten Ausführungsform dadurch, dass das Außenrohr mit Luft, einer Flüssigkeit oder einem thixotropen Gel aufgefüllt ist. Die Signaladern sind somit von einem Medium umgeben, in dem sich jene dann im Zuge einer Lageänderung bewegen können.

In einer geeigneten Ausgestaltung weist die Bündelader zudem eine Zugentlastung und/oder einen Leitungsmantel auf, welche ebenfalls die Signaladern umgeben. Vorzugsweise umgibt dabei die Zugentlastung das Außenrohr und der Leitungsmantel umgibt die Zugentlastung, ist also als äußerste Schicht der Bündelader angeordnet. Die Zugentlastung ist beispielsweise ein Faser- oder Drahtgeflecht aus Stahl oder Aramid.

Insbesondere zur Sicherung des Kabels gegen eine zu starke Dehnung, weist das Führungselement in einer vorteilhaften Ausgestaltung zumindest ein Zugentlastungselement auf, wobei die Signalleitung und das Zugentlastungselement senkrecht zur Führungsebene gemessen etwa gleich dick sind. Durch das zusätzliche Zugentlastungselement wird die Signalleitung insbesondere weiter entlastet. Geeigneterweise erfolgen Materialauswahl und Dimensionierung des Zugentlastungselements derart, dass das Kabel einen bestimmten Zugmodul aufweist, der im Bereich einer für das Kabel zulässigen Kabeldehnung liegt, insbesondere in Anbetracht der geplanten Verwendung des Kabels. Da das Zugentlastungselement und die Signalleitung in etwa gleich dick sind, ist zudem weiterhin ein besonders kompakter Aufbau des Kabels, besonders in Richtung der kurzen Achse gewährleistet. Das Zugentlastungselement ist beispielsweise ein Draht, ein Seil, ein Garn oder eine Faser oder ein Verbund aus mehreren Drähten, Seilen, Garnen oder Fasern und vorzugsweise aus einem elastischen Metall oder Kunststoff mit geeigneten Festigkeits- und Dehnungseigenschaften gefertigt.

In einer besonders bevorzugten Ausführungsform weist das Führungselement zwei Zugentlastungselemente auf, welche die Signalleitung seitlich einfassen und die Führungsebene definieren, innerhalb derer die Signalleitung gewunden verläuft. Die Zugentlastungselemente verlaufen somit in der Führungsebene und sind im Querschnitt des Kabels entlang der langen Achse angeordnet. Zwischen den Zugentlastungselementen ist die Signalleitung angeordnet, die dabei entsprechend gewunden verläuft, während die Zugentlastungselemente im Wesentlichen gerade verlaufen und somit einen homogenen Querschnitt des Kabels gewährleisten.

In einer Weiterbildung mit Formteilen sind diese geeigneterweise im Querschnitt zwischen den Zugentlastungselementen und der Signalleitung angeordnet, füllen also entsprechende Zwischenräume insbesondere vollständig aus, sodass das Kabel insgesamt eine besonders einfache Außenkontur aufweist und im Inneren besonders robust zusammengehalten ist. Bei einer jeweils runden Ausgestaltung der Zugentlastungselemente und der Signalader weisen die Formteile dann seitlich jeweils geeignete konkave Ausnehmungen auf, in welchen die Zugentlastungselemente und die Signalader insbesondere formschlüssig einsitzen. Auf diese Weise ist die Signalader dann beidseitig von Formteilen insbesondere vollständig eingefasst. Die Formteile selbst weisen dabei in Richtung der kurzen Achse des Kabels jeweils eine Höhe auf, die dem Durchmesser der Signalleitung entspricht, sodass das Kabel eine glatte Außenfläche aufweist.

In einer geeigneten Weiterbildung ist auf die Anordnung aus Signalader, Zugentlastungselementen und Formteilen ein Mantel aufgebracht, der diese gesamte Anordnung umschließt und insbesondere als Außenmantel des Kabels vor Umwelteinflüssen schützt. Der Mantel ist beispielsweise aufextrudiert oder auflaminiert. Der Mantel weist eine Manteldicke auf, die insbesondere etwa 0,05 bis 1 mm beträgt oder in einer Variante mehr als 1 mm.

Vorzugsweise besteht das Kabel ausschließlich aus dem Führungselement und der Signalleitung und weist ansonsten keine weiteren Bestandteile auf. Das Führungselement besteht hierbei dann insbesondere je nach Ausgestaltung aus den Formteilen und/oder einem Mantel des Kabels sowie in einer Alternative zusätzlich einem oder mehreren Zugentlastungselementen.

Zur Herstellung des Kabels wird mittels eines flachen Führungselements eine Führungsebene vorgegeben sowie ein gewundener Pfad, entlang dessen eine Signalleitung geführt wird, wobei in der Führungsebene mehrere Biegungen der Signalleitung ausgebildet werden.

In einer bevorzugten Weiterbildung wird das Führungselement mittels einer Anzahl an Formteilen gebildet, die in einer Längsrichtung hintereinander angeordnet werden. Dazu werden zunächst mehrere Formteile bereitgestellt und hintereinander angeordnet, sodass der Pfad vorgegeben wird, indem eine Führungskontur ausgebildet wird, an welcher im Folgenden die Signalleitung angelegt wird. Zusätzlich oder alternativ werden zwei Gruppen von Formteilen gebildet, wobei die beiden Gruppen die Signalleitung seitlich einschließen und insbesondere formschlüssig haltern.

Vorteilhafterweise wird nach dem Zusammensetzen der Formteile und der Signalleitung auf diese gesamte Anordnung ein Mantel aufgebracht, beispielsweise aufextrudiert oder auflaminiert, sodass die gesamte Anordnung von dem Mantel eingeschlossen ist. Der Mantel ist dabei insbesondere als Außenmantel ausgebildet.

Nachfolgend wird ein Ausführungsbeispiel der Erfindung anhand einer Zeichnung näher erläutert. Darin zeigen jeweils schematisch:
- Figur 1: ein Kabel in einer Querschnittansicht und
- Figur 2: das Kabel in einer Längsschnittansicht.

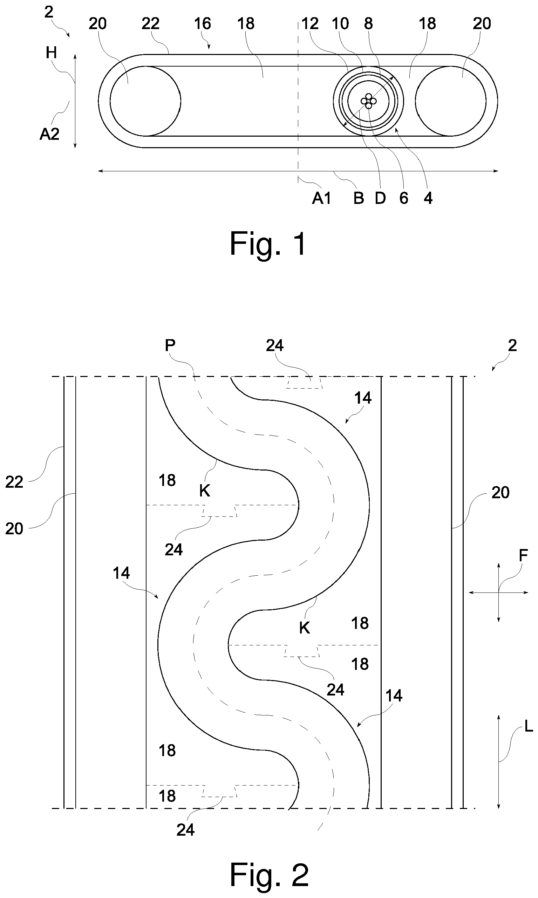

In den Figuren 1 und 2 ist ein Kabel 2 dargestellt, welches zur Signalübertragung ausgebildet ist und hierzu eine Signalleitung 4 aufweist. Diese ist hier als sogenannte Bündelader konzipiert und umfasst eine Anzahl von Signaladern 6, welche hier als Lichtwellenleiter ausgebildet sind. Diese sind im inneren eines Außenrohres 8 geführt, welches in dem hier gezeigten Ausführungsbeispiel zusätzlich von einer Zugentlastung 10 sowie einem Leitungsmantel 12 umgeben ist. Die Signaladern 6 sind im Außenrohr 8 lose geführt, das heißt es existiert ein Zwischenraum zwischen Außenrohr 8 und den Signaladern 6, der insbesondere mit Luft, einer Flüssigkeit, oder einem thixotropischen Gel ausgefüllt ist.

Wie besonders aus Figur 2 deutlich erkennbar ist, folgt die Signalleitung 4 einem gewundenen Pfad P, der hier insbesondere mäanderförmig entlang des Kabels 2 verläuft. Die Signalleitung 4 weist somit mehrere Biegungen 14 auf, die hier abwechselnd links- und rechtsgekrümmt sind. Dabei ist die Signalleitung 4 lediglich in einer Ebene gebogen, die als Führungsebene F von einem Führungselement 16 des Kabels 2 vorgegeben ist. Dieses Führungselement 16 ist insgesamt flach ausgeführt und definiert auf diese Weise die Führungsebene F, welche in Figur 2 der Zeichenebene entspricht. Der Pfad P liegt nun innerhalb dieser Führungsebene F, sodass die Signalleitung 4 sich lediglich entlang jener erstreckt und das Kabel 2 insgesamt einen besonders flachen Aufbau erhält.

Der flache Aufbau ist besonders aus Figur 1 ersichtlich, welche das Kabel 2 im Querschnitt zeigt. Deutlich erkennbar ist, dass das Kabel 2 entlang einer kurzen Achse A1 eine Höhe H aufweist, die geringer ist als eine Breite B des Kabels entlang einer langen Achse A2, welche zur kurzen Achse A1 senkrecht verläuft. In dem hier gezeigten Ausführungsbeispiel beträgt die Breite B etwa das fünffache eines Durchmessers D der hier rund ausgeführten Signalleitung 4. Die Höhe H entspricht dagegen in etwa dem Durchmesser D, ist also ungefähr genauso groß.

Das Führungselement 16 besteht in dem hier gezeigten Ausführungsbeispiel aus einer Anzahl von Formteilen 18, einer Anzahl von Zugentlastungselementen 20 sowie einem Mantel 22, welcher gleichzeitig ein Außenmantel des Kabels 2 ist. Die Zugentlastungselemente 20 sind beispielsweise als Stahlseile oder Aramidfasern ausgebildet und verlaufen im Wesentlichen gerade in Längsrichtung L des Kabels 2. Dabei liegen die Zugentlastungselemente 20 hier ebenfalls in der Führungsebene F. Zwischen den beiden Zugentlastungselementen 20 verläuft die Signalleitung 6. Die verbleibenden Zwischenräume sind durch die Formteile 18 ausgefüllt. Dabei weist jedes Formteil 18 eine Kontur auf. Die zusammengesetzten Formteile 18 bilden dann gemeinsam eine Führungskontur K, welche den Pfad P vorgibt und an welcher die Signalleitung 4 anliegt. Die Signalleitung 4 wird dabei insbesondere an den gebogen verlaufenden Randseiten der Formteile 18 entlang geführt.

Die Formteile 18 sind dabei als Gleichteile konzipiert, sodass diese hintereinander angeordnet eine periodische Struktur bilden. In dem hier gezeigten Ausführungsbeispiel sind die Formteil 18 insbesondere in etwa U-förmig ausgebildet, wie besonders aus Figur 2 ersichtlich ist. Die Formteile 18 weisen allgemein zumindest einen konvexen sowie einen konkaven Abschnitt der Randseite auf. Bei der U-förmigen Ausgestaltung ist die Mitte durch einen konkaven Abschnitt gebildet, an den sich jeweils ein äußerer konvexer Abschnitt anschließt. Die konvexen Abschnitte fluchten dabei mit den konvexen Abschnitten der benachbarten Formteile 18.

Ebenfalls wird aus Figur 2 deutlich, dass die Formteile 18 in zwei Gruppen organisiert sind, die sich jeweils in Längsrichtung L erstrecken, wobei die beiden Gruppen die Signalleitung 4 seitlich einfassen. Innerhalb einer Gruppe sind die jeweiligen Formteile 18 dann in Längsrichtung L des Kabels 2 hintereinander angeordnet.

Zudem sind hier zwei aufeinanderfolgende Formteile 18 miteinander über ein Kupplungselement 24 verbunden, welches in dem dargestellten Ausführungsbeispiel als Lasche ausgeführt ist die in eine dazu komplementären Ausnehmung des nachfolgenden Formteils 18 eingesteckt ist.

Der Mantel 22 ist auf die gesamte Anordnung aus Signalleitung 4, Formteilen 18 und Zugentlastungselementen 20 herum aufgebracht, insbesondere aufextrudiert und definiert eine Außenkontur des Kabels 2, die, wie aus Figur 1 ersichtlich, in etwa einem Rechteck entspricht, bei welchem die kurzen Seiten abgerundet ausgeführt sind. Insgesamt ist das Kabel 2 dadurch besonders flach ausgebildet. Das Kabel 2 kann dennoch gefahrlos einer hohen Dehnbelastung ausgesetzt werden, da aufgrund des in der Führungsebene F gewundenen Verlaufs der Signalleitung 4 eine ausreichende Überlänge der Signalleitung 4 realisiert ist.

### Bezugszeichenliste

- 2: Kabel
- 4: Signalleitung
- 6: Signalader
- 8: Außenrohr
- 10: Zugentlastung
- 12: Leitungsmantel
- 14: Biegung
- 16: Führungselement
- 18: Formteil
- 20: Zugentlastungselement
- 22: Mantel
- 24: Kupplungselement
- A1: kurze Achse
- A2: lange Achse
- B: Breite
- D: Durchmesser
- F: Führungsebene
- H: Höhe
- K: Kontur
- L: Längsrichtung
- P: Pfad

## Patentansprüche

1. Kabel (2), mit einem Führungselement (16) und mit einer Signalleitung (4), wobei sich das Führungselement (16) in einer Führungsebene (F) flach erstreckt,
wobei mittels des Führungselements (16) die Signalleitung (4) in der Führungsebene (F) entlang eines gewundenen Pfads (P) geführt ist,
wobei die Signalleitung (4) in der Führungsebene (F) mehrere Biegungen (14) aufweist,
wobei das Führungselement (16) eine Führungskontur (K) aufweist, welche den Verlauf des Pfads (P) festlegt und an welcher die Signalleitung (4) anliegt, sodass eine Zwangsführung für die Signalleitung (4) vorgegeben ist,
wobei das Führungselement (16) eine Anzahl von Formteilen (18) aufweist, welche die Führungskontur (K) ausbilden,
**dadurch gekennzeichnet,**
**dass** die Signalleitung (4) eine Bündelader ist, mit einem Außenrohr (8) und Signaladern (6), die innerhalb des Außenrohrs (8) verlaufen, wobei das Außenrohr (8) einen Innendurchmesser aufweist, der größer ist als ein Gesamtdurchmesser der Signaladern (6), sodass diesen ein Bewegungsraum zur Verfügung steht.

2. Kabel (2) nach Anspruch 1,
wobei die Formteile (18) aus einem elastischen Material gefertigt sind, um bei einer Dehnung des Kabels (2) eine Längenänderung zu ermöglichen.

3. Kabel (2) nach einem der Ansprüche 1 oder 2,
wobei die Führungskontur (K) einen begrenzten Führungsraum definiert und hierzu zwei gegenüberliegende Wandungsbereiche aufweist, die den Führungsraum begrenzen und zwischen denen die Signalleitung (4) einliegt,
wobei die Führungskontur (K) im Querschnitt einer Außenkontur der Signalleitung (4) folgt.

4. Kabel (2) nach einem der Ansprüche 1 bis 3,
**dadurch gekennzeichnet,**
**dass** der Pfad (P) mäanderförmig ist.

5. Kabel (2) nach einem der Ansprüche 1 bis 4,
**dadurch gekennzeichnet,**
**dass** das Führungselement (16) im Querschnitt eine Höhe (H) aufweist sowie senkrecht zu dieser eine Breite (B), und dass die Signalleitung (4) einen Durchmesser (D) aufweist, wobei die Höhe (H) in etwa dem Durchmesser (D) entspricht und die Breite (B) größer ist als der Durchmesser (D), wobei die Breite (B) vorzugsweise wenigstens doppelt so groß ist wie der Durchmesser (D).

6. Kabel (2) nach einem der Ansprüche 1 bis 5,
**dadurch gekennzeichnet,**
**dass** dieses sich in einer Längsrichtung (L) erstreckt und mehrere Formteile (18) in Längsrichtung (L) hintereinander angeordnet sind.

7. Kabel (2) nach einem der Ansprüche 1 bis 6,
**dadurch gekennzeichnet,**
**dass** die Formteile (18) als Gleichteile ausgebildet sind.

8. Kabel (2) nach einem der Ansprüche 1 bis 7,
**dadurch gekennzeichnet,**
**dass** ein jeweiliges Formteil (18) ein Kupplungselement (24) aufweist, mittels dessen das jeweilige Formteil (18) mit einem nachfolgenden Formteil (18) verbunden ist.

9. Kabel (2) nach einem der Ansprüche 1 bis 8,
**dadurch gekennzeichnet,**
**dass** das Führungselement (16) einen Mantel (22) aufweist, innerhalb dessen die Signalleitung (4) geführt ist,
**dass** die Formteile (18) - ggf. zusammen mit weiteren Elementen - bis auf die Führungskontur (K) einen durch den Mantel (22) definierten Innenraum vollständig ausfüllen.

10. Kabel (2) nach einem der Ansprüche 1 bis 9,
**dadurch gekennzeichnet,**
**dass** das Führungselement (16) ein Formteil (18) aufweist, mit einer Länge, welche in etwa einer Länge des Kabels (2) entspricht.

11. Kabel (2) nach einem der Ansprüche 1 bis 10,
**dadurch gekennzeichnet,**
**dass** die Signalleitung (4) rund ist und/oder
**dass** die Signalleitung (4) zumindest eine Signalader (6) aufweist, die als Lichtwellenleiter ausgebildet ist und/oder
**dass** das Außenrohr (8) mit Luft, einer Flüssigkeit oder einem thixotropen Gel aufgefüllt ist.

12. Kabel (2) nach einem der Ansprüche 1 bis 11,
**dadurch gekennzeichnet,**
**dass** das Führungselement (16) zumindest ein Zugentlastungselement (20) aufweist, wobei die Signalleitung (4) und das Zugentlastungselement (20) senkrecht zur Führungsebene (F) gemessen vorzugsweise in etwa gleich dick sind und/oder
**dass** das Führungselement (16) zwei Zugentlastungselemente (20) aufweist, welche die Signalleitung (4) seitlich einfassen und die Führungsebene (F) definieren, innerhalb derer die Signalleitung (4) gewunden verläuft.

13. Kabel (2) nach einem der Ansprüche 1 bis 12,
**dadurch gekennzeichnet,**
**dass** dieses ausschließlich aus dem Führungselement (16) und der Signalleitung (4) besteht und/oder
**dass** das Führungselement (16) einen Mantel (22) aufweist, innerhalb dessen die Signalleitung (4) geführt ist.

14. Verfahren zur Herstellung eines Kabel (2) gemäß einem der Ansprüche 1 bis 13,
wobei mittels eines flachen Führungselements (16) eine Führungsebene (F) vorgegeben wird sowie ein gewundener Pfad (P), entlang dessen eine Signalleitung (4) geführt wird, wobei in der Führungsebene (F) mehrere Biegungen (14) der Signalleitung (4) ausgebildet werden,
wobei das Führungselement (16) eine Führungskontur (K) aufweist, welche den Verlauf des Pfads (P) festlegt und an welcher die Signalleitung (4) anliegt, sodass eine Zwangsführung für die Signalleitung vorgegeben wird, wobei das Führungselement (16) eine Anzahl von Formteilen (18) aufweist, welche die Führungskontur (K) ausbilden, **dadurch gekennzeichnet, dass** die Signalleitung (4) eine Bündelader ist, mit einem Außenrohr (8) und Signaladern (6), die innerhalb des Außenrohrs (8) verlaufen, wobei das Außenrohr (8) einen Innendurchmesser aufweist, der größer ist als ein Gesamtdurchmesser der Signaladern (6), sodass diesen ein Bewegungsraum zur Verfügung steht.

15. Verfahren nach Anspruch 14,
**dadurch gekennzeichnet,**
**dass** das Führungselement (16) mittels eines Formteils (18) gebildet wird, welches als Endlosware bereitgestellt wird oder zumindest mit einer Länge, welche einer Länge des fertigen Kabels entspricht und vorzugsweise dass das Formteil (18) als insbesondere massives Halbzeug bereitgestellt wird, in welches eine Führungskontur (K) eingebracht, insbesondere eingefräst wird, die den Pfad (P) vorgibt.

## Claims

1. Cable (2), with a guide element (16) and with a signal line (4), the guide element (16) extending flatwise in a guide plane (F),
wherein the signal line (4) is guided in the guide plane (F) along a winding path (P) by means of the guide element (16),
wherein the signal line (4) has a plurality of bends (14) in the guide plane (F), wherein the guide element (16) has a guide contour (K) which defines the course of the path (P) and to which the signal line (4) is attached, so that a forced guidance for the signal line (4) is predetermined, the guide element (16) having a number of moulded parts (18) which form the guide contour (K),
**characterized in**
**that** the signal line (4) is a loose tube, with an outer tube (8) and signal cores (6) which run inside the outer tube (8), the outer tube (8) having an inner diameter that is greater than a total diameter of the signal cores (6), so that there is room for movement for said signal cores.

2. Cable (2) according to Claim 1,
wherein the moulded parts (18) are made of an elastic material in order to allow a change in length when the cable (2) is stretched.

3. Cable (2) according to one of Claims 1 or 2,
wherein the guide contour (K) defines a limited guide space and for this purpose it has two opposite wall areas which delimit the guide space and between which the signal line (4) lies,
wherein in cross section the guide contour (K) follows an outer contour of the signal line (4).

4. Cable (2) according to one of Claims 1 to 3,
**characterized in**
**that** the path (P) has a meandering form.

5. Cable (2) according to one of Claims 1 to 4,
**characterized in**
**that** in cross section the guide element (16) has a height (H) and a width (B) perpendicular to said width, and that the signal line (4) has a diameter (D), the height (H) corresponding approximately to the diameter (D) and the width (B) being greater than the diameter (D), wherein the width (B) preferably is at least twice as large as the diameter (D).

6. Cable (2) according to one of Claims 1 to 5,
**characterized in**
**that** this extends in a longitudinal direction (L) and a plurality of moulded parts (18) are arranged one behind the other in the longitudinal direction (L).

7. Cable (2) according to one of Claims 1 to 6,
**characterized in**
**that** the moulded parts (18) are designed as identical parts.

8. Cable (2) according to one of Claims 1 to 7,
**characterized in**
**that** a respective moulded part (18) has a coupling element (24), by means of which the respective moulded part (18) is connected to a subsequent moulded part (18).

9. Cable (2) according to one of Claims 1 to 8,
**characterized in**
**that** the guide element (16) has a jacket (22) within which the signal line (4) is guided,
**that** the moulded parts (18) - possibly together with other elements - except for the guide contour (K) completely fill an interior space defined by the jacket (22).

10. Cable (2) according to one of Claims 1 to 9,
**characterized in**
**that** the guide element (16) has a moulded part (18) with a length which corresponds approximately to a length of the cable (2).

11. Cable (2) according to one of Claims 1 to 10,
**characterized in**
**that** the signal line (4) is round and/or
**that** the signal line (4) has at least one signal wire (6) which is designed as an optical fibre and/or
**that** the outer tube (8) is filled with air, a liquid or a thixotropic gel.

12. Cable (2) according to one of Claims 1 to 11,
**characterized in**
**that** the guide element (16) has at least one strain relief element (20), wherein the signal line (4) and the strain relief element (20) measured perpendicularly to the guide plane (F) preferably have approximately the same thickness and/or
**that** the guide element (16) has two strain relief elements (20) which surround the signal line (4) laterally and define the guide level (F) within which the signal line (4) extends tortuously.

13. Cable (2) according to one of Claims 1 to 12,
**characterized in**
**that** said cable consists exclusively of the guide element (16) and the signal line (4) and/or
**that** the guide element (16) has a jacket (22) within which the signal line (4) is guided.

14. Method for producing a cable (2) according to one of Claims 1 to 13,
wherein a guide plane (F) is predetermined by means of a flat guide element (16) and a winding path (P) along which a signal line (4) is guided, wherein in the guide plane (F) several bends (14) of the signal line (4) are formed, wherein the guide element (16) has a guide contour (K) which defines the course of the path (P) and to which the signal line (4) is attached, so that a forced guidance for the signal line is predetermined,
wherein the guide element (16) comprises a number of moulded parts (18) which form the guide contour (K),
**characterized in**
**that** the signal line (4) is a loose tube, with an outer tube (8) and signal cores (6) which run inside the outer tube (8), the outer tube (8) having an inner diameter that is greater than a total diameter of the signal cores (6), so that there is room for movement for said signal cores.

15. The method according to Claim 14,
**characterized in**
**that** the guide element (16) is formed by means of a moulded part (18) which is provided as endless product or at least with a length which corresponds to a length of the finished cable and preferably
**that** the moulded part (18) is provided as a particularly solid semi-finished product, into which a guide contour (K) is introduced, in particular milled, which defines the path (P).

## Revendications

1. Câble (2), avec un élément de guidage (16) et avec une ligne de signal (4), dans lequel l'élément de guidage (16) s'étend à plat dans un plan de guidage (F),
dans lequel la ligne de signal (4) est conduit dans le plan de guidage (F) le long d'un conduit sinueux (P) au moyen de l'élément de guidage (16), dans lequel la ligne de signal (4) a une pluralité de coudes (14) dans le plan de guidage (F),
dans lequel l'élément de guidage (16) a un contour de guidage (K) qui définit le cours du conduit (P) et contre lequel la ligne de signal (4) repose, de sorte qu'un guidage forcé pour la ligne de signal (4) est prédéterminé,
dans lequel l'élément de guidage (16) a un nombre de parties façonnées (18) qui forment le contour de guidage (K),
**caractérisé en ce**
**que** la ligne de signal (4) est un faisceau spiralé avec un tube externe (8) et des noyaux de signal (6) qui s'étendent à l'intérieur du tube externe (8), le tube externe (8) ayant un diamètre interne supérieur à un diamètre total des noyaux de signal (6), afin que ces noyaux de signal aient de la place de mouvement.

2. Câble (2) selon la revendication 1,
dans lequel les pièces moulées (18) sont réalisées en un matériau élastique afin de permettre un changement de longueur lorsque le câble (2) est tendu.

3. Câble (2) selon l'une des revendications 1 ou 2,
dans lequel le contour de guidage (K) définissant un espace de guidage limité et ayant à cet effet deux zones de paroi opposées qui délimitent l'espace de guidage et entre lesquelles se situe la ligne de signal (4),
dans lequel en section transversale le contour de guidage (K) suit un contour extérieur de la ligne de signal (4).

4. Câble (2) selon l'une des revendications 1 à 3,
**caractérisé en ce**
**que** le conduit (P) est conçu en forme de méandre.

5. Câble (2) selon l'une des revendications 1 à 4,
**caractérisé en ce**
**qu'**en section transversale l'élément de guidage (16) a une hauteur (H) ainsi qu'une largeur (B) perpendiculaire à ladite hauteur, et que la ligne de signal (4) a un diamètre (D), l'hauteur (H) correspondant approximativement au diamètre (D) et la largeur (B) étant supérieure au diamètre (D), dans lequel la largeur (B) est de préférence au moins deux fois plus grande que le diamètre (D).

6. Câble (2) selon l'une des revendications 1 à 5,
**caractérisé en ce**
**que** ledit câble s'étend dans une direction longitudinale (L) et qu'une pluralité de pièces moulées (18) sont disposées l'une derrière l'autre dans la direction longitudinale (L).

7. Câble (2) selon l'une des revendications 1 à 6,
**caractérisé en ce**
**que** les pièces moulées (18) sont conçues comme des pièces identiques.

8. Câble (2) selon l'une des revendications 1 à 7,
**caractérisé en ce**
**qu'**une pièce moulée respective (18) a un élément de couplage (24), au moyen duquel la pièce moulée respective (18) est reliée à une pièce moulée ultérieure (18).

9. Câble (2) selon l'une des revendications 1 à 8,
**caractérisé en ce**
**que** l'élément de guidage (16) a une gaine (22) à l'intérieur de laquelle la ligne de signal (4) est guidée,
**que** les pièces moulées (18) - éventuellement avec d'autres éléments - à l'exception du contour de guidage (K) remplissent complètement un espace intérieur défini par la gaine (22).

10. Câble (2) selon l'une des revendications 1 à 9,
**caractérisé en ce**
**que** l'élément de guidage (16) a une partie moulée (18) d'une longueur qui correspond approximativement à une longueur du câble (2).

11. Câble (2) selon l'une des revendications 1 à 10,
**caractérisé en ce**
**que** la ligne de signal (4) est ronde et/ou
**que** la ligne de signal (4) a au moins un fil de signal (6) qui est conçu comme une fibre optique et/ou
**que** le tube extérieur (8) est rempli d'air, d'un liquide ou d'un gel thixotrope.

12. Câble (2) selon l'une des revendications 1 à 11,
**caractérisé en ce**
**que** l'élément de guidage (16) a au moins un élément de décharge de traction (20), la ligne de signal (4) et l'élément de décharge de traction (20) mesurés perpendiculairement au plan de guidage (F) ont de préférence approximativement la même épaisseur et/ou
l'élément de guidage (16) comporte deux éléments de décharge de traction (20) qui entourent latéralement la ligne de signal (4) et définissent le niveau de guidage (F) à l'intérieur duquel la ligne de signal (4) s'étend sous forme sinusoïdale.

13. Câble (2) selon l'une des revendications 1 à 12,
**caractérisé en ce**
**qu'**il se compose exclusivement de l'élément de guidage (16) et de la ligne de signal (4) et/ou
l'élément de guidage (16) présente une gaine (22) à l'intérieur de laquelle la ligne de signal (4) s'étend.

14. Procédé de fabrication d'un câble (2) selon l'une des revendications 1 à 13 dans lequel un plan de guidage (F) est déterminé au moyen d'un élément de guidage plat (16) et d'un conduit sinueux (P) le long duquel une ligne de signal (4) est guidée, dans lequel plusieurs coudes (14) de la ligne de signal (4) sont formés dans le plan de guidage (F),
dans lequel l'élément de guidage (16) a un contour de guidage (K) qui définit le cours du conduit (P) et sur lequel repose la ligne de signal (4), de sorte qu'un guidage forcé pour la ligne de signal est déterminé,
dans lequel l'élément de guidage (16) a un certain nombre de parties moulées (18) qui forment le contour de guidage (K),
**caractérisé en ce**
**que** la ligne de signal (4) est un faisceau spiralé avec un tube extérieur (8) et des fils de signal (6) qui s'étendent à l'intérieur du tube extérieur (8), le tube extérieur (8) ayant un diamètre intérieur qui est supérieur au diamètre total des fils de signal (6), afin que ces noyaux de signal aient de la place de mouvement.

15. Procédé selon la revendication 14,
**caractérisé en ce**
**que** l'élément de guidage (16) est formé au moyen d'une pièce moulée (18) qui est prévue comme produit continu ou au moins avec une longueur qui correspond à une longueur du câble fini et de préférence
**que** la pièce moulée (18) est fournie sous la forme d'un produit semi-fini particulièrement solide, dans lequel est introduit un contour de guidage (K), notamment fraisé, qui définit la conduit (P).
